# EUROPÄISCHE PATENTSCHRIFT

(11) **EP 1 581 576 B1**
(45) Veröffentlichungstag und Bekanntmachung des Hinweises auf die Patenterteilung: **16.06.2010**
(21) Anmeldenummer: 03767760.6
(22) Anmeldetag: 06.12.2003
(51) Int. Cl.: C08G 18/80

(54) **HYDROPHILIERTE BLOCKIERTE POLYISOCYANATE**
HYDROPHILIZED BLOCKED POLYISOCYANATES
POLYISOCYANATES BLOQUES HYDROPHILISES

(30) Priorität: 20.12.2002 DE 10260298
(43) Veröffentlichungstag der Anmeldung: 05.10.2005
(73) Patentinhaber: Bayer MaterialScience AG, 51368 Leverkusen (DE)
(72) Erfinder: RISCHE, Thorsten, 59423 Unna (DE); GÜRTLER, Christoph, 50676 Köln (DE); NAUJOKS, Karin, 51519 Odenthal (DE); FELLER, Thomas, 42659 Solingen (DE)
(86) Internationale Anmeldenummer: PCT/EP2003/013820
(87) Internationale Veröffentlichungsnummer: WO 2004/058847

(56) Entgegenhaltungen:
- WO-A-95/35332
- US-A- 5 350 825
- US-A- 6 025 433

## Beschreibung

Die vorliegende Erfindung betrifft neue hydrophilierte blockierte Polyisocyanate, ein Verfahren zu deren Herstellung und ihre Verwendung.

Die Blockierung von Polyisocyanaten zum zeitweisen Schutz der Isocyanat-Gruppen ist eine seit langem bekannte Arbeitsmethode und wird z.B. im Houben Weyl, Methoden der organischen Chemie XIV/2, S. 61-70 beschrieben. Härtbare Zusammensetzungen, die blockierte Polyisocyanate enthalten, finden z.B. Verwendung in Polyurethan-Lacken.

Eine Übersicht prinzipiell geeigneter Blockierungsmittel findet sich z.B. bei Wicks et al. in Progress in Organic Coatings 1975, 3, S. 73-79, 1981, 9, S. 3-28 und 1999, 36, S. 148-172.

In wässrigen Beschichtungsmitteln werden üblicherweise hydrophilierte blockierte Polyisocyanate verwendet, deren Herstellung beispielsweise in der DE-A 24 56 469 und der DE-A 28 53 937 beschrieben wird.

Nachteilig bei der Verwendung von hydrophilierten blockierten Polyisocyanaten des Stands der Technik ist, dass nach der Deblockierung bzw. Vernetzung ein gewisser Anteil des Blockierungsmittels im entstehenden Lackfilm verbleibt und dessen Eigenschaft nachteilig beeinflusst. Eigenschaften wie Kratzfestigkeit und Säurestabilität von Einkomponenten-Lackfilmen sind aufgrund des verbleibenden Blockierungsmittels schlechter als die sogenannter Zweikomponenten-(2K)-Polyurethan Beschichtungen (z.B. T. Engbert, E. König, E. Jürgens, Farbe & Lack, Curt R. Vincentz Verlag, Hannover 10/1995). Die Abspaltung des Blockierungsmittels und dessen gasförmiges Entweichen aus dem Lackfilm kann zur Blasenbildung im Lack führen. Gegebenenfalls kann eine Nachverbrennung des emittierten Blockierungsmittels aus ökologischen und arbeitshygienischen Aspekten notwendig werden.

Typischerweise betragen die Einbrenntemperaturen bei Systemen, die die zum Stand der Technik zählenden hydrophilierten blockierten Polyisocyanate enthalten, 150 bis 170°C.

Für wässrige 1K-Beschichtungssysteme mit niedrigeren Einbrenntemperaturen von 90 -120°C finden neuerdings überwiegend Malonsäuredieethylester blockierte Polyisocyanate Verwendung (z.B. EP-A 0 947 531). Im Gegensatz zu Blockierungen mit z.B. N-heterocyclischen Verbindungen, wie Caprolactam oder Dimethylpyrazol oder aber z.B. Butanonoxim, wird das Blockierungsmittel hierbei nicht vollständig abgespalten, sondern es kommt zu einer Umesterung am Malonsäurediethylester blockierten Isocyanat unter Abspaltung von Ethanol.

Es wurde nun gefunden, dass die Blockierung hydrophilierter Polyisocyanate mit CH-aziden cyclischen Ketonen zu Produkten führt, die ohne Abspaltung des Blockierungsmittels, d.h. emissionsfrei, reagieren und über Vernetzungstemperaturen unter 150°C verfügen. Darüber hinaus lassen sich diese hydrophilierten blockierten Polyisocyanate auch mit anderen wässrigen Bindemitteln kombinieren.

Gegenstand der Erfindung sind Polyisocyanate, die
i) nicht ionisch hydrophilierende Gruppen auf Basis von Polyalkylenoxidpolyethern, die mindestens 30 Gew.-% Ethylenoxideinheiten aufweisen und/oder
ii) ionisch oder potentiell ionisch hydrophilierende Gruppen aufweisen, die bei Wechselwirkung mit Wasser ein pH-abhängigs Dissoziationsgleichgewicht eingehen und daher pH-abhängig neutral, positiv oder negativ geladen sind, und
iii) mindestens eine Struktureinheit der Formel (1) 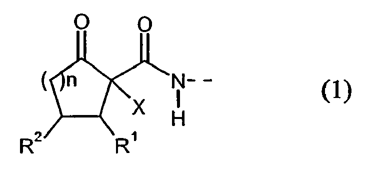 aufweisen, in welcher
   - X: eine elektronenziehende Gruppe ist,
   - R¹, R²: unabhängig voneinander ein Wasserstoffatom, ein gesättigter oder ungesättigter aliphatischer oder cycloaliphatischer, ein gegebenenfalls substituierter aromatischer oder araliphatischer Rest sind und je bis zu 12 Kohlenstoffatome enthalten und
   - n: eine ganze Zahl von 0 bis 5 ist.

Ein weiterer Gegenstand der Erfindung ist ein Verfahren zur Herstellung der erfindungsgemäßen Polyisocyanate, bei dem
A) ein oder mehrere organische Polyisocyanate mit
B) einer oder mehreren organischen Verbindungen mit mindestens einer isocyanatreaktiven Gruppe, die
   b1) nichtionisch hydrophilierende Gruppen auf Basis von Polyalkylenoxidpolyethem, die mindestens 30 Gew.-% Ethylenoxideinheiten aufweisen,
   und/oder
   b2) ionisch oder potentiell ionisch hydrophilierende Gruppen aufweisen, die bei Wechselwirkung mit Wasser ein pH-abhängiges Dissziationsgleichgewicht eingehen und daher pH-abhängig neutral, positiv oder negativ geladen sind,
C) einem oder mehreren Blockierungsmitteln enthaltend mindestens ein CH-azides cyclisches Keton der allgemeinen Formel (2), 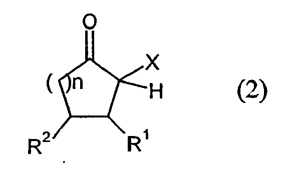 in welcher
   - X: eine elektronenziehende Gruppe ist,
   - R¹, R²: unabhängig voneinander ein Wasserstoffatom, ein gesättigter oder ungesättigter aliphatischer oder cycloaliphatischer, ein gegebenenfalls substituierter aromatischer oder araliphatischer Rest sind und je bis zu 12 Kohlenstoffatome enthalten und
   - n: eine ganze Zahl von 0 bis 5 ist,
   und
D) gegebenenfalls einem oder mehreren (cyclo)aliphatischen Mono- bzw. Polyaminen mit 1 bis 4 Aminogruppen des Molekulargewichtsbereichs bis 400, und gegebenenfalls einem oder mehreren mehrwertigen Alkoholen mit 1 bis 4 Hydroxylgruppen des Molekulargewichtsbereichs bis 400, ggf. auch Aminoalkoholen,
   in Anwesenheit von
E) einem oder mehreren Katalysatoren,
F) ggf. Hilfs- und Zusatzstoffe und
G) ggf. Lösemitteln
miteinander umgesetzt werden.

Zur Herstellung der erfindungsgemäßen Polyisocyanate können als Komponente A) alle organischen Isocyanatgruppen-aufweisende Verbindungen, bevorzugt aliphatische, cycloaliphatische, aromatische oder heterocyclische Polyisocyanate einer NCO-Funktionalität ≥ 2 einzeln oder in beliebigen Mischungen untereinander verwendet werden.

Bevorzugt weisen die Verbindungen der Komponente A) eine mittlere NCO-Funktionalität von 2,0 bis 5,0, bevorzugt von 2,3 bis 4,5, einen Gehalt an Isocyanat-gruppen von 5,0 bis 27,0 Gew.-%, bevorzugt von 14,0 bis 24,0 Gew.-% und vorzugsweise einen Gehalt an monomeren Diisocyanaten von weniger als 1 Gew.-%, bevorzugt weniger als 0,5 Gew.-% auf.

Geeignete Diisocyanate zur Herstellung der Verbindungen der Komponente A) sind durch Phosgenierung oder nach phosgenfreien Verfahren, beispielsweise durch thermische Urethanspaltung, zugängliche Di- bzw. Triisocyanate des Molekulargewichtsbereichs 140 bis 400 mit aliphatisch, cycloaliphatisch, araliphatisch und/oder aromatisch gebundenen Isocyanatgruppen, wie z.B. 1,4-Diisocyanatobutan, 1,5-Diisocyanatopentan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan (Desmodur^{®} W, Bayer AG, Leverkusen), 4-Isocyanatomethyl-1,8-octandiisocyanat (Triisocyanatononan, TIN), ω,ω'-Diisocyanato-1,3-dimethylcyclohexan (H₆XDI), 1-Isocyanato-1-methyl-3-isocyanato-methylcyclohexan, 1-Isocyanato-1-methyl-4-isocyanato-methylcyclohexan, Bis-(isocyanatomethyl)-norboman, 1,5-Naphthalen-diisocyanat, 1,3- und 1,4-Bis-(2-isocyanato-prop-2-yl)-benzol (TMXDI), 2,4- und 2,6-Diisocyanatotoluol (TDI) insbesondere das 2,4 und das 2,6-Isomere und technische Gemische der beiden Isomeren, 2,4'- und 4,4'-Diisocyanatodiphenylmethan (MDI), 1,5-Diisocyanatonaphthalin, 1,3-Bis(isocyanato-methyl)benzol (XDI) sowie beliebige Mischungen genannter Verbindungen.

Gut geeignet als Verbindungen der Komponente A) sind Polyisocyanate, die durch Umsetzung der Di- oder Triisocyanate mit sich selbst über Isocyanatgruppen erhältlich sind, wie Uretdione oder Carbodiimidverbindungen oder wie Isocyanurate oder Iminooxadiazindione, die durch Reaktion dreier Isocyanatgruppen gebildet werden. Die Polyisocyanate können ebenfalls monomere Di- und/oder Triisocyanate und/oder oligomere Polyisocyanate mit Biuret-, Allophanat- und Acylharnstoff-Strukturelementen, monomerenarme oder anteilig modifizierte monomere Di-, Triisocyanate sowie beliebige Gemische der geannten Polyisocyanate enthalten. Gut geeignet sind ebenfalls Polyisocyanatprepolymere, die durchschnittlich mehr als eine Isocyanatgruppe pro Molekül aufweisen. Sie werden durch Vorreaktion eines molaren Überschusses, beispielsweise eines der obengenannten Polyisocyanate, mit einem organischen Material erhalten, das mindestens zwei aktive Wasserstoffatome pro Molekül aufweist, z.B. in Form von Hydroxygruppen.

Besonders bevorzugte Polyisocyanate der Komponente A) sind solche, die eine Uretdion-, Isocyanurat-, Acylharnstoff , Biuret-, Allophanat- oder Iminooxadiazindion- und/oder Oxadiazintrionstruktur enthalten (vgl. auch J. Prakt. Chem. 336 (1994) Seite 185-200) und auf vorstehend genannten, insbesondere den aliphatischen und/oder cycloaliphatischen Diisocyanaten basieren.

Ganz besonders bevorzugt werden in Komponente A) Polyisocyanate oder Polyisocyanatgemische der genannten Art mit ausschließlich aliphatisch und/oder cycloaliphatisch gebundenen Isocyanatgruppen eingesetzt, insbesondere auf Basis von Hexamethylendiisocyanat (HDI), Isophorondiisocyanat (IPDI) und/oder 4,4'-Diisocyanatodicyclohexylmethan.

Geeignete Verbindungen der Komponente B) sind nicht ionisch (Typ b1)) und/oder ionisch bzw. potentiell ionisch (Typ b2)) hydrophilierende Verbindungen mit gegenüber Isocyanaten reaktiven Gruppen, die einzeln oder in beliebigen Mischungen untereinander eingesetzt werden können.

Nichtionisch hydrophilierende Verbindungen b1) sind beispielsweise einwertige, im statistischen Mittel 5 bis 70, bevorzugt 7 bis 55 Ethylenoxideinheiten pro Molekül aufweisende Polyalkylenoxidpolyetheralkohole mit mindestens 30 Gew.-% Ethylenoxideinheiten, wie sie in an sich bekannter Weise durch Alkoxylierung geeigneter Startermoleküle zugänglich sind (z.B. in Ullmanns Encyclopädie der technischen Chemie, 4.Auflage, Band 19, Verlag Chemie, Weinheim S. 31-38).

Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan, oder Tetrahydrofurfurylalkohol; Diethylenglykol-monoalkylether wie beispielsweise Diethylenglykolmonobutylether; ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol; sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol.

Bevorzugte Startermoleküle sind gesättigte Monoalkohole sowie Diethylenglykol-monoalkylether. Besonders bevorzugt wird Diethylenglykolmonobutylether als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bevorzugt handelt es sich bei den Polyalkylenoxidpolyetheralkoholen um reine Polyethylenoxidpolyether oder gemischte Polyalkylenoxidpolyether, deren Alkylenoxideinheiten zu mindestens 30 mol-% bevorzugt zu mindestens 40 mol-% aus Ethylenoxideinheiten bestehen.

Besonders bevorzugte nicht ionisch hydrophilierende Verbindungen b1) sind monofunktionelle gemischte Polyalkylenoxidpolyether, die mindestens 40 mol-% Ethylenoxid- und maximal 60 mol-% Propylenoxideinheiten aufweisen.

Unter ionisch bzw. potentiell ionisch hydrophilierenden Verbindungen b2) der Komponente B) werden sämtliche Verbindungen verstanden, die mindestens eine isocyanatreaktive Gruppe sowie mindestens eine Funktionalität, wie z.B. -COOY, -SO₃Y, -PO(OY)₂ (Y = H, NH₄⁺, Metallkation), -NR₂, -NR₃⁺ (R = H, Alkyl, Aryl), aufweisen, die bei Wechselwirkung mit wässrigen Medien ein ggf. pH-Wert-abhängiges Dissoziationsgleichgewicht eingeht und auf diese Weise negativ, positiv oder neutral geladen sein kann.

Bevorzugt sind diese Verbindungen mono- oder dihydroxyfunktionelle Carbon-, Sulfon- oder Phosphonsäuren, mono- oder diaminofunktionelle Carbon-, Sulfon- oder Phosphonsäuren, die in Form innerer Salze (Zwitterionen, Betaine, Ylide) oder als Metall- oder Ammoniumsalze vorliegen können. Beispiele für die genannten ionisch bzw. potentiell ionisch hydrophilierenden Verbindungen sind Dimethylolpropionsäure, Hydroxypivalinsäure, N-(2-Aminoethyl)-β-alanin, 2-(2-Amino-ethylamino)-ethansulfonsäure, Ethylendiamin-propyl- oder butylsulfonsäure, 1,2- oder 1,3-Propylendiamin-β-ethylsulfonsäure, Lysin, 3,5-Diaminobenzoesäure, das Hydrophilierungsmittel gemäß Beispiel 1 aus der EP-A 0 916 647 und deren Alkali- und/oder Ammoniumsalze; das Addukt von Natriumbisulfit an Buten-2-diol-1,4, Polyethersulfonat, das propoxylierte Addukt aus 2-Butendiol und NaHSO₃ (z.B. in der DE-A 2 446 440, Seite 5-9, Formel I-III) sowie Verbindungen, die in kationische Gruppen überführbare, z.B. amin-basierende, Bausteine wie N-Methyl-diethanolamin als hydrophile Aufbaukomponenten enthalten. Weiterhin kann als Komponente b2) in Komponente B) auch CAPS (Cyclohexylaminopropansulfonsäure) wie z.B. in der WO 01/88006 verwendet werden.

Besonders bevorzugte ionisch bzw. potentiell ionisch hydrophilerende Verbindungen für die Verwendung in Komponente b2) sind N-(2-Aminoethyl)-β-alanin, 2-(2-Amino-ethylamino)-ethansulfonsäure, Dimethylolpropionsäure, des Hydrophilierungsmittels gemäß Beispiel 1 der EP-A 0 916 647, sowie deren Metall- oder Ammoniumsalze.

Die Komponente B) ist bevorzugt eine Kombination aus nicht ionisch und ionisch bzw. potentiell ionisch hydrophilierenden Verbindungen genannter Art, insbesondere Kombinationen aus nicht ionisch und anionisch hydrophilierenden Verbindungen.

Als Blockierungsmittel in Komponente C) werden CH-azide cyclische Ketone der allgemeinen Formel (2), 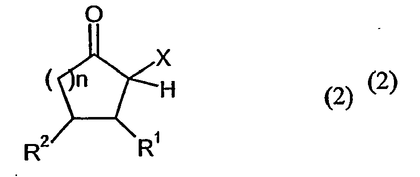 eingesetzt, in welcher
- X: eine elektronenziehende Gruppe ist,
- R¹, R²: unabhängig voneinander ein Wasserstoffatom, ein gesättigter oder ungesättigter aliphatischer oder cycloaliphatischer, ein gegebenenfalls substituierter aromatischer oder araliphatischer Rest sein können und je bis zu 12 Kohlenstoffatome enthalten und
- n: eine ganze Zahl von 0 bis 5 ist.

Bei der elektronenziehenden Gruppe X kann es sich um alle Substituenten handeln, die z.B. durch mesomere und/oder induktive Effekte zu einer CH-Azidität des αständigen Wasserstoffes fuhren. Dies können beispielsweise Estergruppen, Sulfoxidgruppen, Sulfongruppen, Nitrogruppen, Phosphonatgruppen, Nitrilgruppen, Isonitrilgruppen oder Carbonylgruppen sein. Bevorzugt sind Nitril-und Estergruppen, besonders bevorzugt der Carbonsäuremethylester- und Carbonsäureethylestergruppen.

Geeignet sind auch Verbindungen der allgemeinen Formel (2), deren Ring gegebenenfalls Heteroatome, wie Sauerstoff-, Schwefel-, oder Stickstoffatome enthalten. Bevorzugt ist hierbei das Strukturmotiv eines Lactons.

Bevorzugt weist das aktivierte cyclische System der Formel (2) eine Ringgröße von 5 (n = 1) und 6 (n = 2) auf.

Bevorzugte Verbindungen der allgemeinen Formel (2) sind Cyclopentanon-2-carboxymethylester und -carboxyethylester, Cyclopentanon-2-carbonsäurenitril, Cyclohexanon-2-carboxymethylester und -carboxyethylester oder Cyclopentanon-2-carbonylmethan. Besonders bevorzugt sind Cyclopentanon-2-carboxymethylester und -carboxyethylester sowie Cyclohexanon-2-carboxymethylester und -carboxyethyl-ester.

Selbstverständlich können in Komponente C) die genannten CH-azide cyclischen Ketone sowohl in Mischungen untereinander als auch in beliebigen Mischungen mit anderen Blockierungsmitteln eingesetzt werden. Geeignete weitere Blockierungsmittel sind beispielsweise Alkohole, Lactame, Oxime, Malonester, Alkylacetoacetate, Triazole, Phenole, Imidazole, Pyrazole sowie Amine, wie z.B. Butanonoxim, Diisopropylamin, 1,2,4-Triazol, Dimethyl-1,2,4-triazol, Imidazol, Malonsäurediethylester, Acetessigester, Acetonoxim, 3,5-Dimethylpyrazol, ε-Caprolactam, N-Methyl-, N-Ethyl-, N-(Iso)propyl-, N-n-Butyl-, N-iso-Butyl-, N-tert.-Butyl-benzylamin oder 1,1-Dimethylbenzylamin, N-Aklyl-N-1,1-Dimethylmethylphenylamin, Addukte von Benzylamin an Verbindungen mit aktivierten Doppelbindungen wie Malonsäureestern, N,N-Dimethylaminopropylbenzylamin und andere tertiäre Aminogruppen enthaltende gegebenenfalls substituierte Benzylamine und/oder Dibenzylamin oder beliebige Gemische dieser Blockierungsmittel. Falls überhaupt mitverwendet beträgt der Anteil dieser weiteren von CH-aziden cyclischen Ketonen verschiedenen Blockierungsmittel der Komponente C) bis zu 80 Gew.-%, vorzugsweise bis zu 60 Gew.-%, ganz besonders bevorzugt bis zu 20 Gew.-% der gesamten Komponente C).

Ganz besonders bevorzugt wird ausschließlich Cyclopentanon-2-carboxyethylester als Komponente C) eingesetzt.

Die Isocyanatgruppen erfindungsgemäßen Polyisocyanate liegen zu mindestens 50 Gew.-%, bevorzugt zu mindestens 60 Gew.-% und besonders bevorzugt zu mindestens 70 Gew.-% in mit Verbindungen aus Komponente C) blockierter Form vor.

Als Komponente D) können weitere gegenüber Isocyanaten reaktive mono-, di-, tri-, und/oder tetra-funktionelle Komponenten einzeln oder in beliebigen Mischungen untereinander verwendet werden. Dies können mono-, di-, tri-, und/oder tetra-amino- oder hydroxyfunktionelle Substanzen mit einem Molekulargewicht bis 400 g/mol wie beispielsweise Ethylendiamin, 1,2- und 1,3-Diaminopropan, 1,3-, 1,4- und 1,6-Diaminohexan, 1,3-Diamino-2,2-dimethylpropan, 1-Amino-3,3,5-trimethyl-5-aminoethyl-cyclohexan (IPDA), 4,4'-Diaminodicyclohexylmethan, 2,4- und 2,6-Diamino-1-methyl-cyclohexan, 4,4'-Diamino-3,3'-dimethyl-dicyclohexylmethan, 1,4-Bis-(2-amino-prop-2-yl)-cyclohexan, Ethylenglykol, Propylenglykol, 1,4-Butandiol, 1,6-Hexandiole, Glycerin, Trimethylolethan, Trimethylolpropan, die isomeren Hexantriole, Pentaerythrit oder beliebige Gemische dieser Verbindungen sein.

Als Verbindungen der Komponente E) können alle dem Fachmann für die Katalyse der NCO-Blockierung bekannte Verbindungen einzeln oder in beliebigen Mischungen verwendet werden. Bevorzugt sind Alkali- und Erdalkalimetallbasen, wie z.B. gepulvertes Natriumcarbonat (Soda) oder Trinatriumphosphat, die Metallsalze insbesondere Carbonate der zweiten Nebengruppe, insbesondere des Zinks, sowie tertiäre Amine wie DABCO (1,4-Diazabicyclo[2.2.2]octan) geeignet.

Bevorzugt als Verbindungen in Komponente E) werden Natriumcarbonat, Kaliumcarbonat oder Zinksalze insbesondere Zink-2-ethylhexanoat verwendet.

Als gegebenenfalls zu verwendende Komponente F) können Hilfs- und Zusatzstoffe oder deren Gemische enthalten sein. Geeignete Verbindungen im Sinne von F) sind z.B. Antioxidantien wie 2,6-Ditert-butyl-4-methylphenol, UV-Absorber vom Typ 2-Hydroxyphenyl-benzotriazol oder Lichtschutzmittel vom Typ der HALS-Verbindungen oder andere handelsübliche Stabilisierungsmittel, wie sie beispielsweise in "Lichtschutzmittel für Lacke" (A. Valet, Vincentz Verlag, Hannover, 1996) und "Stabilization of Polymeric Materials" (H. Zweifel, Springer Verlag, Berlin, 1997, Appendix 3, S. 181-213) beschrieben sind.

Als organische Lösemittel G) geeignet sind die an sich üblichen Lacklösemittel, wie z.B. Ethylacetat, Butylacetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol oder Testbenzin. Mischungen, die vor allem höher substituierte Aromaten enthalten, wie sie beispielsweise unter den Bezeichnungen Solvent Naphtha, Solvesso^{®} (Exxon Chemicals, Houston, USA), Cypar^{®} (Shell Chemicals, Eschborn, DE), Cyclo Sol^{®} (Shell Chemicals, Eschborn, DE), Tolu Sol^{®} (Shell Chemicals, Eschborn, DE), Shellsol^{®} (Shell Chemicals, Eschborn, DE) im Handel sind, sind ebenfalls geeignet. Weitere Lösemittel sind beispielsweise Kohlensäureester, wie Dimethylcarbonat, Diethylcarbonat, 1,2-Ethylencarbonat und 1,2-Propylencarbonat, Lactone, wie β-Propiolacton, γ-Butyrolacton, ε-Caprolacton, ε-Methylcaprolacton, Propylenglykoldiacetat, Diethylenglykoldimethylether, Dipropylenglykoldimethylether, Diethylenglykolethyl- und -butyletheracetat, N-Methylpyrrolidon und N-Methylcaprolactam, oder beliebige Gemische solcher Lösemittel. Bevorzugte Lösemittel sind Aceton, 2-Butanon, 1-Methoxypropyl-2-acetat, Xylol, Toluol, Mischungen, die vor allem höher substituierte Aromaten enthalten, wie sie beispielsweise unter den Bezeichnungen Solvent Naphtha, Solvesso^{®} (Exxon Chemicals, Houston, USA), Cypar^{®} (Shell Chemicals, Eschborn, DE), Cyclo Sol^{®} (Shell Chemicals, Eschborn, DE), Tolu Sol^{®} (Shell Chemicals, Eschborn, DE), Shellsol^{®} (Shell Chemicals, Eschborn, DE) im Handel sind sowie N-Methylpyrrolidon. Besonders bevorzugt sind Aceton, 2-Butanon und N-Methylpyrrolidon.

Das erfindungsgemäße Verfahren wird bevorzugt bei Temperaturen von 15°C bis 140°C, besonders bevorzugt 40 bis 90°C durchgeführt.

Beim erfindungsgemäßen Verfahren werden die Komponenten A), B), C) und ggf. D) in Gegenwart eines Katalysators E) in beliebiger Reihenfolge gebenenfalls. im Beisein der Komponenten F) und ggf. in einem Lösemittel G) miteinander umgesetzt.

In einer bevorzugten Ausführungsform der Erfindung enthält B) sowohl nicht ionisch (gemäß b1)) als auch ionisch bzw. potentiell ionisch (gemäß (b2)) hydrophilierende Verbindungen und die Herstellung der erfindungsgemäßen Polyisocyanate wird derart durchgeführt, dass A) zunächst mit den Verbindungen des Typs b1) sowie gegebenenfalls den Komponenten D), F) und G) versetzt wird. Anschließend wird das Reaktionsgemisch mit dem Blockierungsmittel C) in Anwesenheit des Katalysators E) gefolgt von den Verbindungen des Typs b2) umgesetzt.

In einer weiteren bevorzugten Ausführungsform der Erfindung enthält B) sowohl Verbindungen gemäß b1) und b2), wobei letztere als isocyanatreaktive Gruppe mindestens eine Hydroxylgruppe haben und frei von Aminofunktionen sind. Die Herstellung der erfindungsgemäßen Polyisocyanate wird dann derart durchgeführt, dass A) mit den hydrophilierenden Verbindungen b1) und b2) sowie gegebenenfalls den Komponenten D), F) und G) versetzt wird. Anschließend wird das Reaktionsgemisch mit dem Blockierungsmittel C) in Anwesenheit des Katalysators E) umgesetzt.

Bevorzugt werden im erfindungsgemäßen Verfahren 40 bis 80 Gew.-% der Komponente A), 1 bis 40 Gew.-% der Komponente B), 15 bis 60 Gew.-% der Komponente C), und 0 bis 30 Gew.-% der Komponente D) eingesetzt, wobei die Summe aus A bis D) sich zu 100 Gew.-% addiert.

Besonders bevorzugt werden im erfindungsgemäßen Verfahren 45 bis 75 Gew.-% der Komponente A), 1 bis 35 Gew.-% der Komponente B), 20 bis 50 Gew.-% der Komponente C), 0 bis 20 Gew.-% der Komponente D) eingesetzt, wobei die Summe aus A bis D) sich zu 100 Gew.-% addiert.

Ganz besonders bevorzugt werden im erfindungsgemäßen Verfahren 50 bis 70 Gew.-% der Komponente A), 3 bis 30 Gew.-% der Komponente B), 25 bis 45 Gew.-% der Komponente C), 0 bis 10 Gew.-% der Komponente D) eingesetzt, wobei die Summe aus A bis D) sich zu 100 Gew.-% addiert.

Die hydrophilierten blockierten Polyisocyanate können gegebenenfalls Stabilisierungsmittel und andere Hilfsstoffe E) sowie gegebenenfalls organische Lösungsmittel F) enthalten. Bezogen auf die Umsetzungsprodukte aus A) bis D) werden die Stabilisierungsmittel und/oder Hilfsstoffe E) in Mengen von 0-25 Gew.-%, bevorzugt von 0 - 15 Gew.-%, besonders bevorzugt von 0 - 5 Gew.-% und die organischen Lösungsmittel F) in Mengen von 0 - 30 Gew.-%, bevorzugt von 0 - 20 Gew.-%, besonders bevorzugt von 0 -10 Gew.-% verwendet.

Besonders bevorzugt wird kein Lösemittel G) mitverwendet.

Die erfindungsgemäßen Polyisocyanate können beispielsweise zur Herstellung von Lacken, Beschichtungen, Schlichten, Klebstoffen und Formkörpern verwendet werden.

Ein weiterer Gegenstand der Erfindung sind wässrige Lösungen oder Dispersionen der erfindungsgemäßen Polyisocyanate sowie ein Verfahren zur Herstellung, bei dem die erfindungsgemäßen hydrophilen Polyisocyanate mit Wasser oder wasserhaltigen Lösemitteln vermischt werden.

Die wässrigen Systeme der blockierten Polyisocyanate weisen einen Festkörpergehalt zwischen 10 bis 70 Gew.-%, bevorzugt von 20 bis 60 Gew.-% und besonders bevorzugt von 25 bis 50 Gew.-% auf und der Anteil ggf. enthaltener organischer Lösemittel G) ist weniger als 15 Gew.-%, bevorzugt weniger als 10 Gew.-%, insbesondere weniger als 5 Gew.-%. Ggf. enthaltenes organisches Lösemittel G) kann z.B. durch Destillation abgetrennt werden.

Gegenstand der Erfindung sind schließlich Beschichtungsmittel enthaltend
a) ein oder mehrere erfindungsgemäße Polyisocyanate,
b) ein oder mehrere filmbildende Harze
c) ggf. Katalysatoren
d) ggf. Lösemittel, Wasser
e) ggf. Hilfs- und Zusatzstoffe
und ein Verfahren zu deren Herstellung, bei dem die Komponenten a) bis e) in beliebiger Reihenfolge miteinander vermischt werden.

Als filmbildende Harze b) sind in Wasser dispergierbare, emulgierbare, lösliche oder dispergiert vorliegende funktionalisierte Polymere geeignet. Beispiele sind Polyesterpolymere oder Epoxidgruppen enthaltende Polyesterpolymere, Polyurethane, Acrylpolymere, Vinylpolymere wie Polyvinylacetat, Polyurethandispersionen, Polyacrylatdispersionen, Polyurethan-Polyacrylat-Hybriddispersionen, Polyvinylether- bzw. Polyvinylesterdispersionen, Polystyrol- bzw. Polyacrylnitrildispersionen, die sowohl in Mischungen als auch in Kombination mit weiteren blockierten Polyisocyanaten und Aminovernetzerharzen wie z.B. Melaminharzern verwendet werden können. Der Feststoffgehalt der filmbildenden Harze beträgt vorzugsweise 10 bis 100 Gew.-% besonders bevorzugt 30 bis 100 Gew.-%.

Die filmbildenden Harze b) können über NCO-reaktive Gruppen wie z.B. Carbonsäuregruppen oder Alkoholgruppen verfügen und somit in Kombination mit den erfindungsgemäßen Polyisocyanaten vernetzen. Wenn die filmbildenden Harze über keine NCO-reaktiven Gruppen verfügen, so besteht die Möglichkeit, dass das Bindemittel bzw. die Schlichte oder das Beschichtungsmittel mit dem Substrat, auf dem es appliziert wurde, reagiert.

Geeignete Katalysatoren c) für die Vernetzung sind alle dem Fachmann für die Isocyanatadditionsreaktion bekannten Katalysatoren wie beispielsweise Dibutylzinndilaureat (DBTL), Triethylamin, 1,4-Diazabicyclo-[2,2,2]-octan, Zinndioktoat oder Dibutylzinndilaurat. Bevorzugt ist Dibutylzinndilaurat.

Diese Katalysatoren c) kommen im allgemeinen in Mengen von 0 bis 5 Gew.-%, bevorzugt von 0,05 bis 2 Gew.-%, insbesondere 0,1 bis 1,5 Gew.-% bezogen auf die Gesamtmenge des Beschichtungsmittels zum Einsatz.

Ein weiterer Gegenstand der Erfindung sind Beschichtungen erhältlich aus den erfindungsgemäßen Beschichtungsmitteln.

Die erfindungsgemäßen Beschichtungsmittel können über beliebige Methoden, wie z.B. Tauchen, Sprühen, Walzen, Spritzen auf Substrate appliziert werden.

Geeignete Substrate zur Beschichtung sind beispielsweise Metalle, Hölzer, Glas, Glasfasern, Kohlefasern, Stein, keramische Mineralien, Beton, Kunststoffe aller Art, Textilien, Leder, Papier, Hartfasern, Stroh oder Bitumen, wobei ggf. vor der Beschichtung mit den erfindungsgemäßen Beschichtungsmitteln eine Grundierung aufgebracht wird. Bevorzugte Substrate sind Kunststoffe, Glasfasern, Kohlefasern, Metalle, Textilien und Leder.

Die erfindungsgemäßen Beschichtungsmittel werden bevorzugt bei Einbrennzeiten von 15 bis 30 Minuten und bei Temperaturen von 100 bis 200°C, bevorzugt von 110 bis 180°C ausgehärtet. Die Einbrennzeiten sind insbesondere von der Menge des eingesetzten Katalysators abhängig. Bevorzugt wird über einen Zeitraum von 30 Minuten bei einer Temperatur von 110 - 140°C eingebrannt.

### Beispiele

In den folgenden Beispielen beziehen sich alle Prozentangaben auf das Gewicht (Gew.-%).

Die Ermittlung des NCO-Gehaltes erfolgte durch Titration gemäß DIN EN ISO 11909 (Titration mit Dibutylamin).

### Beispiel 1

21,9 g eines monofunktionellen Polyethers, auf n-Butanol gestartet auf Ethylenoxid/Propylenoxidbasis (ca. 85:15) mit einem mittleren Molgewicht von 2250 (OHZ = 25) (Polyether LB 25, Bayer AG, Leverkusen, DE), 125,5 g eines isocyanuratgruppen-haltigen Polyisocyanats auf Basis von 1,6- Diisocyanatohexan (HDI) mit einem NCO-Gehalt von 21,8 % (HDI-Polyisocyanat mit Isocyanuratstruktur, Viskosität 3200 mPas, Desmodur^{®} N3300, Bayer AG, Leverkusen) sowie 0,25 g Zinkethylhexanoat wurden vorgelegt und unter Rühren auf 50°C aufgeheizt. Anschließend wurden innerhalb von 30 min 75,8 g Cyclopentanon-2-carboxy-ethylester zugegeben. Nach Zugabe wurde 20 min bei 50 °C nachgerührt, 7,0 g eines Hydrazin-Adduktes aus 1 Mol Hydrazinhydrat und 2 Mol Propylencarbonat vom Molekulargewicht 236 zudosiert und solange gerührt, bis der theoretische NCO-Wert erreicht ist. Anschließend wurde eine Lösung aus 17,4 g AAS-Lösung (Bayer AG, DE, Leverkusen, 45 %ige wässrige Lösung des Natriumsalzes von 2-(2-Aminoethylamino)-ethansulfonsäure, Bayer AG, Leverkusen, DE) und 121,9 g Wasser innerhalb von 10 min zudosiert und das Reaktionsgemisch 5 min weitergerührt. Die Dispergierung erfolgte durch Zugabe von 420,8 g Wasser (T = 60 °C) in 10 min. Die Nachrührzeit betrugt 2 h. Man erhielt eine Dispersion mit einem Festkörper von 30,0 %.

### Beispiel 2

21,9 g eines monofunktionellen Polyethers, n-Butanol gestartet auf Ethylenoxid/Propylenoxidbasis (ca. 85:15) mit einem mittleren Molgewicht von 2250 (OHZ = 25) (Polyether LB 25, Bayer AG, Leverkusen, DE), 125,5 g eines isocyanuratgruppen-haltigen Polyisocyanats auf Basis von 1,6- Diisocyanatohexan (HDI) mit einem NCO-Gehalt von 21,8 % (HDI-Polyisocyanat mit Isocyanuratstruktur, Viskosität 3200 mPas, Desmodur^{®} N3300, Bayer AG, Leverkusen) sowie 0,15 g Zinkethylhexanoat wurden vorgelegt und unter Rühren auf 50°C aufgeheizt. Anschließend wurde innerhalb von 30 min 75,8 g Cyclopentanon-2-carboxy-ethylester zugegeben. Nach Zugabe wurde 20 min bei 50°C nachgerührt, 7,0 g eines Hydrazin-Adduktes aus 1 Mol Hydrazinhydrat und 2 Mol Propylencarbonat vom Molekulargewicht 236 zudosiert und solange gerührt, bis der theoretische NCO-Wert erreicht ist. Anschließend wurde eine Lösung aus 18,3 g AAS-Lösung (Bayer AG, DE, Leverkusen, 45 %-ige wässrige Lösung des Natriumsalzes von 2-(2-Aminoethylamino)-ethansulfonsäure, Bayer AG, Leverkusen, DE) und 146,0 g Wasser innerhalb von 10 min zudosiert und das Reaktionsgemisch 5 min weitergerührt. Die Dispergierung erfolgte durch Zugabe von 400,0 g Wasser (T = 60 °C) in 10 min. Die Nachrührzeit betrugt 2 h. Man erhielt eine Dispersion mit einem Festkörper von 30,0 %.

### Beispiel 3

21,3 g eines monofunktionellen Polyethers, n-Butanol gestartet auf Ethylenoxid/Propylenoxidbasis (ca. 85:15) mit einem mittleren Molgewicht von 2250 (OHZ = 25) (Polyether LB 25, Bayer AG, Leverkusen, DE), 121,6 g eines isocyanuratgruppen-haltigen Polyisocyanats auf Basis von 1,6- Diisocyanatohexan (HDI) mit einem NCO-Gehalt von 21,8 % (HDI-Polyisocyanat mit Isocyanuratstruktur, Viskosität 3200 mPas, Desmodur^{®} N3300, Bayer AG, Leverkusen) sowie 0,12 g Zinkethylhexanoat wurden vorgelegt und unter Rühren auf 50°C aufgeheizt. Anschließend wurden innerhalb von 30 min 73,4 g Cyclopentanon-2-carboxy-ethylester zugegeben. Nach Zugabe wurde 20 min bei 50 °C nachgerührt, 7,0 g eines Hydrazin-Adduktes aus 1 Mol Hydrazinhydrat und 2 Mol Propylencarbonat vom Molekulargewicht 236 zudosiert und solange gerührt, bis der theoretische NCO-Wert erreicht war. Anschließend wurde eine Lösung aus 15,5 g des Hydrophilierungsmittels KV 1386 (40 %ige wässrige Lösung des Natriumsalzes von N-(2-Aminoethyl)-β-alanin, BASF AG, Ludwigshafen, DE) und 108,4 g Wasser innerhalb von 10 min zudosiert und das Reaktionsgemisch 5 min weitergerührt. Die Dispergierung erfolgte durch Zugabe von 417,2 g Wasser (T = 60°C) in 10 min. Die Nach betrug 2 h. Man erhielt eine Dispersion mit einem Festkörper von 30,0 %.

### Beispiel 4

23,6 g eines monofunktionellen Polyethers, n-Butanol gestartet auf Ethylenoxid/- Propylenoxidbasis (ca. 85:15) mit einem mittleren Molgewicht von 2250 (OHZ = 25) (Polyether LB 25, Bayer AG, DE), 18,9 g Polyethersulfonat (OHZ = 263, Polypropylenoxiddiol, mitteleres Molgewicht: 426 g/mol, Bayer AG, DE)), 135,1 g eines isocyanuratgruppen-haltigen Polyisocyanats auf Basis von 1,6-Diisocyanatohexan (HDI) mit einem NCO-Gehalt von 21,8 % (HDI-Polyisocyanat mit Isocyanuratstruktur, Viskosität 3200 mPas, Desmodur^{®} N3300, Bayer AG, Leverkusen) sowie 0,28 g Zinkethylhexanoat wurden vorgelegt und unter Rühren auf 50°C aufgeheizt. Anschließend wurden innerhalb von 30 min 81,6 g Cyclopentanon-2-carboxy-ethylester zugegeben. Nach Zugabe wurde 20 min bei 50°C nachgerührt, 7,5 g eines Hydrazin-Adduktes aus 1 Mol Hydrazinhydrat und 2 Mol Propylencarbonat vom Molekulargewicht 236 zudosiert und solange gerührt, bis der theoretische NCO-Wert erreicht ist. Die Dispergierung erfolgte durch Zugabe von 622,4 g Wasser (T = 60 °C) in 10 min. Die Nachrührzeit betrugt 2 h. Man erhielt eine Dispersion mit einem Festkörper von 29,9 %.

### Beispiel 5

25,3 g eines monofunktionellen Polyethers, n-Butanol gestartet auf Ethylenoxid/- Propylenoxidbasis (ca. 85:15) mit einem mittleren Molgewicht von 2250 (OHZ = 25) (Polyether LB 25, Bayer AG, Leverkusen, DE), 6,4 g Dimethylolpropionsäure, 144,8 g eines isocyanuratgruppen-haltigen Polyisocyanats auf Basis von 1,6-Diisocyanatohexan (HDI) mit einem NCO-Gehalt von 21,8 % (HDI-Polyisocyanat mit Isocyanuratstruktur, Viskosität 3200 mPas, Desmodur^{®} N3300, Bayer AG, Leverkusen) sowie 0,29 g Zinkethylhexanoat wurden vorgelegt und unter Rühren auf 50°C) aufgeheizt. Anschließend wurden innerhalb von 30 min 87,4 g Cyclopentanon-2-carboxy-ethylester zugegeben. Nach Zugabe wurde 20 min bei 50°C nachgerührt, 8,1 g eines Hydrazin-Adduktes aus 1 Mol Hydrazinhydrat und 2 Mol Propylencarbonat vom Molekulargewicht 236 zudosiert und solange gerührt, bis der theoretische NCO-Wert erreicht ist. Anschließend wurden 4,6 g Triethylamin zugegeben und weitere 10 min bei 50°C gerührt. Die Dispergierung erfolgte durch Zugabe von 634,4 g Wasser (T = 60°C) in 10 min. Die Nachrührzeit betrugt 2 h. Man erhielt eine Dispersion mit einem Festkörper von 30,0 %.

### Beispiel 6

67,7 g (0,35 val) eines Polyisocyanats auf Basis von 1,6- Diisocyanatohexan (HDI) mit einem NCO-Gehalt von 21,8 % (HDI-Polyisocyanat mit Isocyanuratstruktur, Viskosität 3200 mPas, Desmodur^{®} N3300, Bayer AG, Leverkusen) wurden zusammen mit 34 mg Zink-2-ethylhexanoat (Octa-Soligen^{®} Zink, Borchers GmbH, Monheim, DE) in einem 250 mL Dreihalskolben mit mechanischer Rührung vorgelegt und in 20,5 g (auf 80 % Festkörper) Methoxypropylacetat gelöst. Zu dieser Lösung tropfte man vorsichtig 40,5 g (0,259 val) Cyclopentanon-2-carboxyethylester so unter Rühren hinzu, dass die Reaktionstemperatur nicht über 40°C stieg. Nach Erreichen des gewünschten NCO-Wertes (2,97%) wurden 20,1 g (0,091 val) CAPS (Cyclohexylaminopropansulfonsäure, Fa. Raschig, DE) (und 11,6 g (0,091 val) Dimethylcyclohexylamin hinzugegeben und bei 80°C so lange gerührt, bis eine klare Lösung erhalten wurde. Vor dem Dispergieren wird das System mit Methoxypropylacetat auf einen Festkörpergehalt von 70% eingestellt. Das so erhaltene hydophilierte Polyisocyanat lässt sich 40%ig in Wasser dispergieren und führt zu einer stabilen Dispersion.

Die Bestimmung der mechanischen Eigenschaften von den erfindungsgemäßen hydrophilierten blockierten Polyisocyanate erfolgt an freien Filmen. Zur Herstellung der freien Filme werden die hydrophilierten blockierten Polyisocyanate in Kombination mit einem filmbildenden Harz abgemischt. Die angeführten Mischungen wurden hergestellt aus 60 Gew.-% Baybond^{®} PU 401 (Anionische-nichtionische PUR-Dispersion mit einem Festkörpergehalt von 40 % und einer mittleren Teilchengröße von 100-300 nm, Bayer AG, DE (filmbildendes Harz)) und 40 Gew.-% eines erfindungsgemäßen hydrophilierten blockierten Polyisocyanats.

Die freien Filme wurden aus diesen Mischungen wie folgt hergestellt: In einem Filmziehgerät, bestehend aus zwei polierten Walzen, die auf einen exakten Abstand eingestellt werden können, wurde vor die hintere Walze ein Trennpapier eingelegt. Mit einer Fühlerblattlehre wurde der Abstand zwischen Papier und vorderer Walze eingestellt. Dieser Abstand entsprach der Filmdicke (nass) der resultierenden Beschichtung, und konnte auf die gewünschte Auflage jedes Striches eingestellt werden. Die Beschichtung war auch konsekutiv in mehreren Strichen möglich. Zum Aufbringen der einzelnen Striche wurden die Produkte (wässrige Formulierungen wurden vorher durch Zugabe von Ammoniak/Polyacrylsäure auf eine Viskosität von 4500 mPa·s gestellt) auf den Spalt zwischen Papier und vorderer Walze gegossen, das Trennpapier wurde senkrecht nach unten weggezogen, wobei auf dem Papier der entsprechende Film entstand. Sollten mehrere Striche aufgebracht werden, wurde jeder einzelne Strich getrocknet und das Papier erneut eingelegt.

Die Bestimmung des 100 % Moduls, erfolgte nach DIN 53504 an Filmen > 100 µm Stärke.

Die Bestimmung der mittleren Teilchengrößen (angegeben ist das Zahlenmittel) der PUR-Dispersionen erfolgte mittels Laserkorrelations-Spektroskopie (Gerät: Malvem Zetasizer 1000, Malver Inst. Limited).

| | **Mischung 1** | **Mischung 2** |
|---|---|---|
| **Filmbildendens Harz 2):** | **Baybond^{®} PU 401** | **Baybond^{®} PU 401** |
| Anteil | 60 Gew.-% | 77 Gew.-% |

| **Härter 1):** | **Dispersion aus Beispiel (erfindungsgemäß)** | **1 Dispersion aus Beispiel 2 (erfindungsgemäß)** |
|---|---|---|
| Anteil | 40 Gew.-% | 23 Gew.-% |
| mittlere Teilchengröße | 156 nm | 159 nm |
| Trocknungsbedingungen | 10 min, 125 °C | 10 min, 125 °C |
| Herstellung der Mischung | Zugabe von 1) zu 2); 5 min rühren bei Raumtemperatur | Zugabe von 1) zu 2); 5 min rühren bei Raumtemperatur |

| **Zugversuch: 0-Wert** | | |
|---|---|---|
| 100 % Modul [MPa] | 0,6 | 2,8 |
| Zugfestigkeit [MPa] | 5,5 | 30,0 |
| Reißdehnung [%] | 1140 | 1150 |

Analog hergestellte Filme der Mischung 1 und 2 die 24 h bei 25°C getrocknet wurden sind stark klebrig und dessen mechanischen Eigenschaften nicht messbar. Die in Tabelle 1 gezeigten Filmprüfungsergebnisse belegen, dass bereits bei einer niedrigen Trocknungstemperatur von 125°C eine Vernetzung des Films stattfindet.

## Patentansprüche

1. Polyisocyanate, die
i) nicht ionisch hydrophilierende Gruppen auf Basis von Polyalkylenoxid-polyethem, die mindestens 30 Gew.-% Ethylenoxideinheiten aufweisen
und/oder
ii) ionisch oder potentiell ionisch hydrophilierende Gruppen aufweisen, die bei Wechselwirkung mit Wasser ein pH-abhängiges Dissoziationsgleichgewicht eingehen und daher pH-abhängig neutral, positiv oder negativ geladen sind,
und
iii) mindestens eine Struktureinheit der Formel (1) 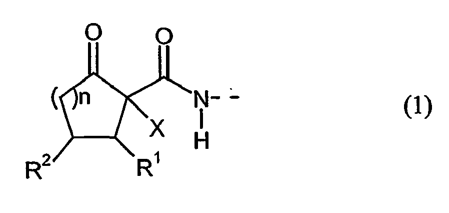 aufweisen, in welcher
X eine elektronenziehende Gruppe ist,
R¹, R² unabhängig voneinander ein Wasserstoffatom, ein gesättigter oder ungesättigter aliphatischer oder cycloaliphatischer, ein gegebenenfalls substituierter aromatischer oder araliphatischer Rest sind und je bis zu 12 Kohlenstoffatome enthalten und
n eine ganze Zahl von 0 bis 5 ist.

2. Polyisocyanate nach Anspruch 1 **dadurch gekennzeichnet, dass** die elektronenziehende Gruppe X eine Ester-, Sulfoxid-, Sulfon-, Nitro-, Phosphonat-, Nitril-, Isonitril- oder Carbonylgruppe ist.

3. Verfahren zur Herstellung der Polyisocyanate nach Anspruch 1 oder 2, bei dem
A) ein oder mehrere organische Polyisocyanate mit
B) einer oder mehreren organischen Verbindungen mit mindestens einer isocyanatreaktiven Gruppe, die
b1) nicht ionisch hydrophilierende Gruppen auf Basis von Polyalkylenoxidpolyethern, die mindestens 30 Gew.-% Ethylenoxideinheiten aufweisen,
und/oder
b2) ionisch oder potentiell ionisch hydrophilierende Gruppen aufweisen, die bei Wechselwirkung mit Wasser ein pH-abhängiges Dissziationsgleichgewicht eingehen und daher pH-abhängig neutral, positiv oder negativ geladen sind,
C) einem oder mehreren Blockierungsmitteln enthaltend mindestens ein CH-azides cyclisches Keton der allgemeinen Formel (2), 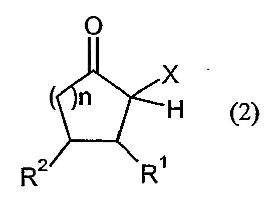 in welcher
X eine elektronenziehende Gruppe ist,
R¹, R² unabhängig voneinander ein Wasserstoffatom, ein gesättigter oder ungesättigter aliphatischer oder cycloaliphatischer, ein gegebenenfalls substituierter aromatischer oder araliphatischer Rest sind und je bis zu 12 Kohlenstoffatome enthalten und
n eine ganze Zahl von 0 bis 5 ist,
und
D) gegebenenfalls einem oder mehreren (cyclo)aliphatischen Mono- bzw. Polyaminen mit 1 bis 4 Aminogruppen des Molekulargewichtsbereichs bis 400, und gegebenenfalls einem oder mehreren mehrwertigen Alkoholen mit 1 bis 4 Hydroxylgruppen des Molekulargewichtsbereichs bis 400, ggf. auch Aminoalkoholen,
in Anwesenheit von
E) einem oder mehreren Katalysatoren,
F) ggf. Hilfs- und Zusatzstoffe und
G) ggf. Lösemitteln miteinander umsetzt.

4. Verwendung der Polyisocyanate nach Anspruch 1 oder 2 zur Herstellung von Lacken, Beschichtungen, Schlichten, Klebstoffen und Formkörpern.

5. Wässrige Lösungen oder Dispersionen von Polyisocyanaten nach Anspruch 1 oder 2.

6. Beschichtungsmittel enthaltend
a) ein oder mehrere Polyisocyanate nach Anspruch 1 oder 2,
b) ein oder mehrere filmbildende Harze,
c) ggf. Katalysatoren,
d) ggf. Lösemittel und
e) ggf. Hilfs- und Zusatzstoffe.

7. Beschichtungen erhältlich aus Beschichtungsmitteln nach Anspruch 6.

8. Substrate beschichtet mit Beschichtungen nach Anspruch 7.

## Claims

1. Polyisocyanates which have
i) nonionically hydrophilicizing groups based on polyalkylene oxide polyethers containing at least 30% by weight ethylene oxide units
and/or
ii) ionically or potentially ionically hydrophilicizing groups which on interaction with water enter into a pH-dependent dissociation equilibrium and are therefore neutral or positively or negatively charged depending on pH,
and
iii) at least one structural unit of the formula (1) 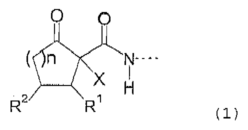
in which
X is an electron-withdrawing group,
R¹, R² independently of one another are a hydrogen atom, a saturated or unsaturated aliphatic or cycloaliphatic radical or an optionally substituted aromatic or araliphatic radical and each contain up to 12 carbon atoms and
n is an integer from 0 to 5.

2. Polyisocyanates according to Claim 1, **characterized in that** the electron-withdrawing group x is an ester, sulphoxide, sulphone, nitro, phosphonate, nitrile, isonitrile or carbonyl group.

3. Process for preparing the polyisocyanates according to Claim 1 or 2, wherein
A) one or more organic polyisocyanates are reacted together with
B) one or more organic compounds having at least one isocyanate-reactive group which have
b1) nonionically hydrophilicizing groups based, on polyalkylene oxide polyethers containing at least 30% by weight ethylene oxide units,
and/or
b2) ionically or potentially ionically hydrophilicizing groups which on interaction with water enter into a pH-dependent dissociation equilibrium and are therefore neutral or positively or negatively charged depending on pH,
C) one or more blocking agents comprising at least one CH-acidic cyclic ketone of the general formule (2), 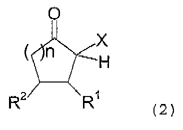 in which
X is an electron-withdrawing group,
R¹, R² independently of one another are a hydrogen atom, a saturated or unsaturated aliphatic or cycloaliphatic radical or an optionally substituted aromatic or araliphatic radical and each contain up to 12 carbon atoms and
n is an integer from 0 to 5,
and
D) optionally one or more (cyclo) aliphatic monoamines and/or polyamines having 1 to 4 amino groups of the molecular weight range up to 400, and optionally one or more polyhydric alcohols having 1 to 4 hydroxyl groups of the molecular weight range up to 400, optionally also amino alcohols,
in the pretence of
E) one or more catalysts,
F) optionally, auxiliaries and additives and
G) optionally, solvents.

4. Use of the polyisocyanates according to Claim 1 or 2 for producing coating materials, coatings, sizes, adhesives and moulding.

5. Aqueous solutions or dispersions of polyisocyanates according to Claim 1 or 2.

6. Coating compositions comprising
a) one or more polyisocyanates according to Claim 1 or 2,
b) one or more film-forming resins,
c) optionally, catalysts,
d) optionally, solvents and
e) optionally, auxiliaries and additives.

7. Coatings obtainable from coating compositions according to Claim 6.

8. Substrates coated with coatings according to Claim 7.

## Revendications

1. Polyisocyanates, lesquels présentent
i) des groupes non ioniquement hydrophilisants à base de poly(oxyde d'alkylène)-polyéthers, lesquels présentent au moins 90 % en masse d'unités oxyde d'éthylène
et/ou
ii) des groupes ioniquement ou potentiellement ioniquement hydrophilisants, lesquels mènent lors d'une interaction avec de l'eau à un équilibre de dissociation dépendant du pH et sont par conséquent chargés de manière neutre, positive ou négative selon le pH,
et
iii) au moins une unité de structure de la formule (I) 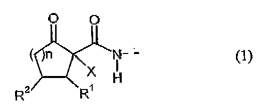
dans laquelle
X représente un groupe attirant les électrons,
R¹, R² sont indépendamment l'un de l'autre un atome d'hydrogène, un reste aliphatique ou cycloaliphatique saturé ou insaturé, un reste aromatique ou araliphatique éventuellement substitué et contiennent chacun jusqu'à 12 atomes de carbone et
n est un nombre entier de 0 à 5.

2. Polyisocyanates selon la revendication 1, **caractérisés en ce que** le groupe attirant les électrons X est un groupe ester, sulfoxyde, sulfone, nitro, phosphonate, nitrile, isonitrile ou carbonyle.

3. Procédé pour la préparation des polyisocyanates selon la revendication 1 ou 2, dans lequel on fait réagir ensemble
A) un ou plusieurs polyisocyanates organiques avec
B) un ou plusieurs composés organiques avec au moins un groupe isocyanate-réactif, lesquels présentent
b1) des groupes non ioniquement hydrophilisants à base de poly(oxyde d'alkylène)-polyéthers, lesquels présentent au moins 30 % en masse d'unités oxyde d'éthylène,
et/ou
b2) des groupes ioniquement ou potentiellement ioniquement hydrophilisants, lesquels mènent lors d'une interaction avec de l'eau à un équilibre de dissociation dépendant du pH et sont par conséquent chargés de manière neutre, positive ou négative selon le pH,
C) un ou plusieurs agents bloquants contenant au moins une cétone cyclique CH-acide de la formule générale (2) 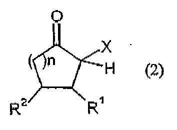 dans laquelle
X est un groupe attirant les électrons,
R¹, R² sont indépendamment l'un de l'autre un atome d'hydrogène, un reste aliphatique ou cycloaliphatique saturé ou insaturé, un reste aromatique ou araliphatique éventuellement substitué et contiennent chacun jusqu'à 12 atomes de carbone et
n est un nombre entier de 0 à 5,
et
D) éventuellement une ou plusieurs mono- respectivement polyamines cyclo(aliphatiques) avec de 1 à 4 groupes amino du domaine de masse moléculaire allant jusqu'à 400, et éventuellement un ou plusieurs alcools polyvalents avec de 1 à 4 groupes hydroxyles du domaine de masse moléculaire allant jusqu'à 400, éventuellement également des aminoalcools, en présence de
E) un ou plusieurs catalyseurs,
F) éventuellement des auxiliaires et des additifs et
G) éventuellement des solvants.

4. Utilisation des polyisocyanates selon la revendication 1 ou 2 pour la préparation de laques, de revêtements, d'enduits, d'adhésifs et de corps moulés.

5. Solutions ou dispersions aqueuses de polyisocyanates selon la revendication 1 ou 2.

6. Agent de revêtement contenant
a) un ou plusieurs polyisocyanates selon la revendication 1 ou 2,
b) une ou plusieurs résines formant un film,
c) éventuellement des catalyseurs,
d) éventuellement des solvants et
e) éventuellement des auxiliaires et des additifs.

7. Revêtements obtenus à partir d'agents de revêtement selon la revendication 6.

8. Substrats revêtus avec des revêtements selon la revendication 7.
